# EUROPEAN PATENT APPLICATION

(11) **EP 3 467 905 A1**
(43) Date of publication of application: **10.04.2019**
(21) Application number: 17806694.0
(22) Date of filing: 30.05.2017
(51) Int. Cl.: H01M 2/30, H01M 2/10

(54) **BATTERY PACK AND BATTERY CELL**

(30) Priority: 30.05.2016 JP 2016107902
(71) Applicant: Kabushiki Kaisha Toshiba, Minato-ku Tokyo 105-8001 (JP); Toshiba Infrastructure Systems & Solutions Corporation, Kawasaki-shi, Kanagawa 212-8585 (JP)
(72) Inventor: ENOMOTO, Takashi, Tokyo 105-8001 (JP); KAWAMURA, Koichi, Tokyo 105-8001 (JP); UCHIDA, Toshinori, Tokyo 105-8001 (JP); HOSHINO, Mitsuhiro, Tokyo 105-8001 (JP); SHUDO, Tadashi, Tokyo 105-8001 (JP); WADA, Satoshi, Tokyo 105-8001 (JP)
(74) Representative: AWA Sweden AB
(86) International application number: PCT/JP2017/020140
(87) International publication number: WO 2017/209141

(57) **Abstract**

A battery pack of an embodiment includes a plurality of battery cells, for example. The battery cells are aligned in a first direction, and each include a positive electrode terminal having one of a male structure and a female structure of a shape to be fitted to the male structure by press-fitting, and a negative electrode terminal having the other of the male structure and the female structure.

## Description

### FIELD

Embodiments of the present invention relate to a battery pack and a battery cell.

### BACKGROUND

Conventionally, battery packs are known, which include metal-case battery cells including electrodes on the top walls, and holders for supporting the battery cells.

### CITATION LIST

### Patent Literature

Patent Literature 1: WO 2013/073046

### SUMMARY OF THE INVENTION

### Problem to be Solved by the Invention

It is preferable to provide such a battery back with a novel configuration and less inconvenience, for example.

### Means for Solving Problem

A battery pack of an embodiment includes a plurality of battery cells, for example. The battery cells are aligned in a first direction, and each include a positive electrode terminal having one of a male structure and a female structure of a shape to be fitted to the male structure by press-fitting, and a negative electrode terminal having the other of the male structure and the female structure.

### BRIEF DESCRIPTION OF DRAWINGS

FIG. 1 is an exemplary perspective view of a battery cell of a battery pack according to a first embodiment.
FIG. 2 is an exemplary perspective view of the battery pack in the first embodiment.
FIG. 3 is a cross-sectional view taken along the line A-A in FIG. 2.
FIG. 4 is an exemplary perspective view of a battery cell of a battery pack according to a second embodiment.
FIG. 5 is an exemplary perspective view of a connection of the battery pack in the second embodiment.
FIG. 6 is an exemplary perspective view of the battery pack in the second embodiment.
FIG. 7 is an exemplary perspective view of a first modification of the battery pack in the second embodiment.
FIG. 8 is an exemplary perspective view of a wiring member in the first modification of the battery pack in the second embodiment.
FIG. 9 is an exemplary perspective view of a second modification of the battery pack in the second embodiment.
FIG. 10 is an exemplary perspective view of a wiring member in the second modification of the battery pack in the second embodiment.
FIG. 11 is an exemplary perspective view of a battery cell of a battery pack according to a third embodiment.
FIG. 12 is an exemplary perspective view of a wiring member of the battery pack in the third embodiment.
FIG. 13 is an exemplary perspective view of the battery pack in the third embodiment.
FIG. 14 is an exemplary perspective view of a battery cell of a battery pack according to a fourth embodiment.
FIG. 15 is an exemplary perspective view of the battery pack in the fourth embodiment.
FIG. 16 is a cross-sectional view taken along the line B-B in FIG. 15.
FIG. 17 is an exemplary cross-sectional view of a first modification of the battery pack in the fourth embodiment.
FIG. 18 is an exemplary perspective view of a battery cell of a battery pack according to a fifth embodiment.
FIG. 19 is an exemplary front view of the battery pack in the fifth embodiment.

### DETAILED DESCRIPTION

The following discloses exemplary embodiments of the present invention. The configurations of the embodiments and actions and results (effects) brought about by the configurations described below are merely exemplary. The present invention can also be achieved by configurations other than those disclosed in the following embodiments. The present invention can attain at least one of various effects (including derivative effects) obtained by the configurations.

The following describes exemplary embodiments with reference to the accompanying drawings. The following embodiments include similar or same elements. Thus, in the following, similar or same elements are denoted by common reference numerals, and overlapping descriptions are omitted. In the present specification, ordinals are used for distinguishing parts and members alone and are not intended to indicate order or priority.

### First Embodiment

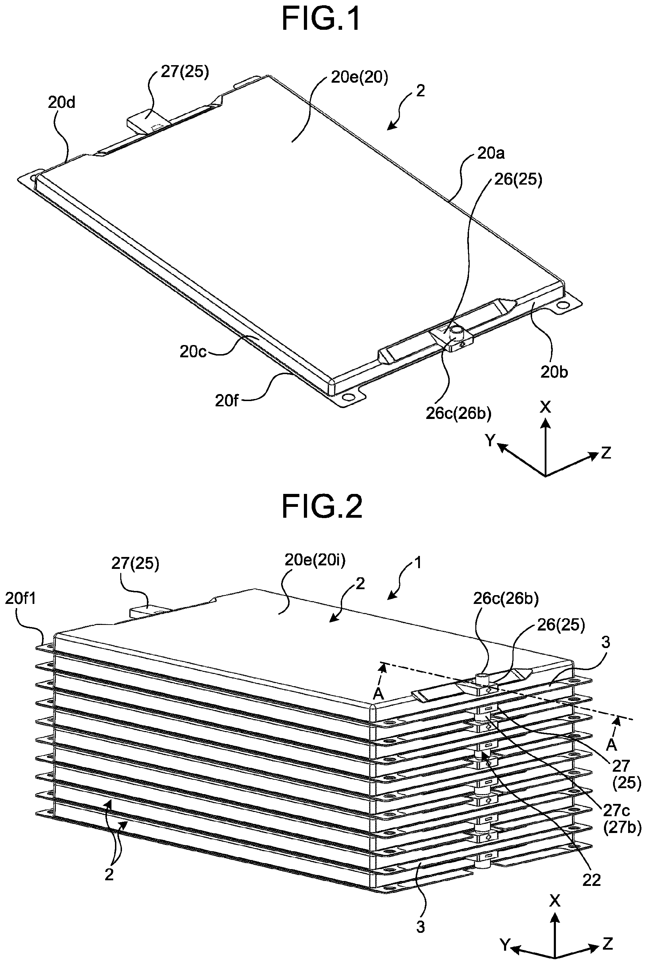

FIG. 1 is a perspective view of a battery cell 2 of a battery pack 1. The battery cell 2 includes a housing 20 and a pair of electrodes 25. One of the electrodes 25 is a positive electrode terminal 26 and the other is a negative electrode terminal 27. In the following description, as illustrated in the drawings, directions are defined for the sake of convenience. X direction is along the thickness (height) of the battery cell 2, Y direction is along the length of the battery cell 2, and Z direction is along the lateral (width) of the battery cell 2. The X direction, the Y direction, and the Z direction are orthogonal to one another.

The battery cell 2 includes, for example, a lithium-ion secondary battery. The battery cell 2 may be another secondary battery such as a nickel-hydrogen battery or a nickel-cadmium battery. The lithium-ion secondary battery is one type of non-aqueous electrolyte secondary battery, in which lithium ions in the electrolyte assume electrical conduction. Examples of the positive electrode material include, for example, lithium-manganese composite oxide, lithium-nickel composite oxide, lithium-cobalt composite oxide, lithium-nickel-cobalt composite oxide, lithium-manganese-cobalt composite oxide, spinel-type lithium-manganese-cobalt composite oxide, or lithiumphosphorus oxide having an olivine structure. Examples of the negative electrode material include, for example, an oxide-based material such as lithium titanate (LTO), or an oxide material such as niobium composite oxide. Examples of the electrolyte (for example, electrolytic solution) include, for example, sole or combination of organic solvent mixed with lithium salt such as fluorine complex salt (for example, LiBF4, LiPF6) such as ethylene carbonate, propylene carbonate, diethyl carbonate, or ethyl methyl carbonate, dimethyl carbonate. The battery cell 2 is also referred to as a cell.

As illustrated in FIG. 1, the housing 20 of the battery cell 2 has a thin flat rectangular parallelepiped shape in the X direction. The housing 20 includes a plurality of walls 20a to 20f. The wall 20e and the wall 20f both extend in the direction orthogonal to the X direction (Y-Z plane) and are spaced apart from each other in parallel in the X direction. One of the walls 20e and 20f can be referred to as a bottom wall or a lower wall, and the other can be referred to as a top wall or an upper wall. The housing 20 is formed of a SUS having a relatively thin thickness, for example.

The walls 20a to 20d are located at the peripheral edges of the wall 20e, and extend between the wall 20e and the wall 20f. The wall 20a and the wall 20c both extend in the direction orthogonal to the Z direction (X-Y plane) and are spaced apart from each other in parallel in the Z direction. The walls 20a and 20c are referred to as lateral walls or peripheral walls, and form two long sides of the four sides of the housing 20. One of the walls 20a and 20c can be provided with a valve for gas venting. The valve is opened to reduce the pressure inside the housing 20 when the pressure exceeds a threshold.

The wall 20b and the wall 20d both extend in the direction orthogonal to the Y direction (X-Z plane) and are spaced apart from each other in the Y direction. The walls 20b and 20d are referred to as lateral walls or peripheral walls, and form two short sides of the four sides of the housing 20. One of the walls 20b and 20d is provided with the positive electrode terminal 26, and the other is provided with the negative electrode terminal 27.

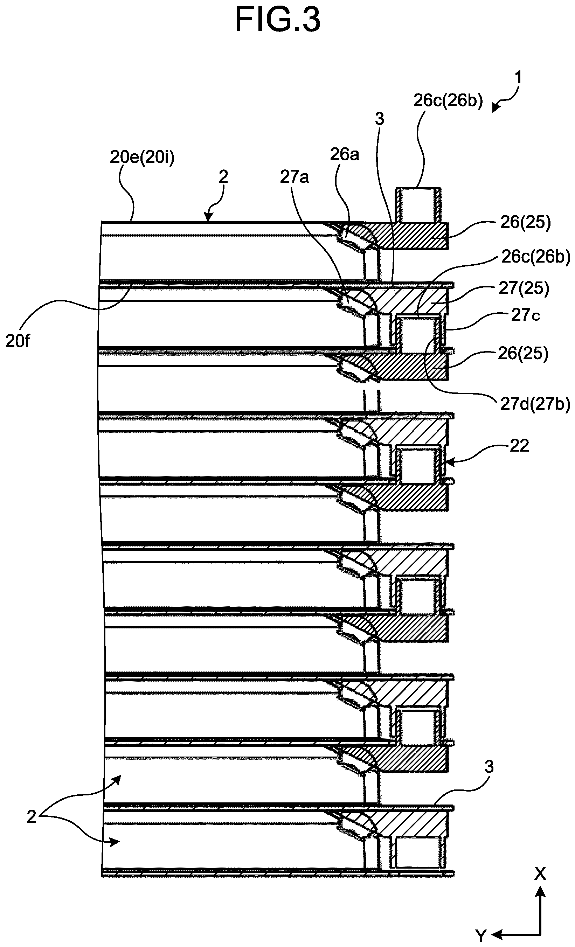

FIG. 2 is a perspective view of the battery pack 1, and FIG. 3 is a cross-sectional view of FIG. 2 taken along the line A-A. As illustrated in FIGS. 2 and 3, the battery pack 1 includes a plurality of battery cells 2 and insulation plates 3, for example. The number, arrangement, and others of respective components of the battery pack 1 such as the battery cells 2 are not limited to those disclosed in the first embodiment. The battery pack 1 can include a monitoring board for monitoring the voltage and temperature of the battery cells 2 and a control board for battery control. The battery pack 1 is also referred to as a battery module and a battery unit.

The battery cells 2 are aligned in the X direction with outer faces 20i of the respective walls 20e face in the same direction (upward). The battery cells 2 are arranged such that the positive electrode terminals 26 and the negative electrode terminals 27 are arranged alternately in the X direction. With such a configuration, in the first embodiment, connections 22 between the positive electrode terminals 26 and the negative electrode terminals 27 are arranged alternately at both sides (left and right) in the Y direction. The X direction is one example of a first direction, and the Y direction is one example of a second direction.

The insulation plates 3 have a rectangular shape extending in the direction orthogonal to the X direction (Y-Z plane). The size of the insulation plates 3 is substantially the same as the size of the walls 20e and 20f. Each insulation plate 3 is located between every two adjacent battery cells 2 in the X direction. The insulation plates 3 and the battery cells 2 are stacked alternately in the X direction.

In the first embodiment, the two adjacent battery cells 2 in the X direction are mechanically and electrically connected to each other by press-fitting of male and female structures illustrated in FIG. 3. Specifically, the positive electrode terminals 26 are each provided with a projection 26c that projects in the X direction (upward). The negative electrode terminals 27 are each provided with a recess 27d that is recessed in the X direction (upward) and is connectable to the projection 26c. The projection 26c is one example of a male structure, and the recess 27d is one example of a female structure. The projection 26c can be referred to as a male connector, and the recess 27d can be referred to as a female connector. The male and female structures are not limited to this example. For example, the positive electrode terminal 26 may be provided with the recess 27d and the negative electrode terminal 27 may be provided with the projection 26c.

Each positive electrode terminal 26 includes a base 26a and a connection 26b provided with the projection 26c, for example. Similarly, each negative electrode terminal 27 includes a base 27a and a connection 27b provided with the recess 27d, for example. The bases 26a and 27a and the connections 26b and 27b are integrated (joined) together by welding, for instance. The connections 26b and 27b are also referred to as connection terminals.

The connection 27b is provided with a projection 27c that projects in the opposite X direction (downward). The projection 27c has a cylindrical shape along the projection 26c, for example. Inside the cylinder of the projection 27c is the recess 27d having an opening width (diameter) that is substantially the same as or slightly smaller than the diameter of the projection 26c. The projection 26c is not limited to this example, and may have a solid columnar shape, for example.

As in the foregoing, in the first embodiment, each of the battery cells 2 includes the positive electrode terminal 26 provided with the projection 26c, and the negative electrode terminal 27 provided with the recess 27d of a shape to be fitted to the projection 26c by press-fitting, for example. By such a configuration, electrically connecting the battery cells 2 can be facilitated due to the projections 26c and the recesses 27d, which can reduce the time and effort needed for the manufacture (assembling work) of the battery pack 1, for example.

In the first embodiment, the projections 26c and the recesses 27d extend in the X direction in which the battery cells 2 are aligned, for example. With such a configuration, electrically connecting the two adjacent battery cells 2 in the X direction can be facilitated due to the projections 26c and the recesses 27d, and the battery cells 2 can be more firmly integrated together in the X direction, for example.

In the first embodiment, in the row of the battery cells 2 in the X direction, the connections 22 formed by the projections 26c and the recesses 27d are alternately arranged at both sides in the Y direction, for example. With such a configuration, the battery cells 2 aligned in the X direction are relatively easily connected to one another via the connections 22, whereby a series circuit of the battery cells 2 can be formed relatively easily, for example.

### Second Embodiment

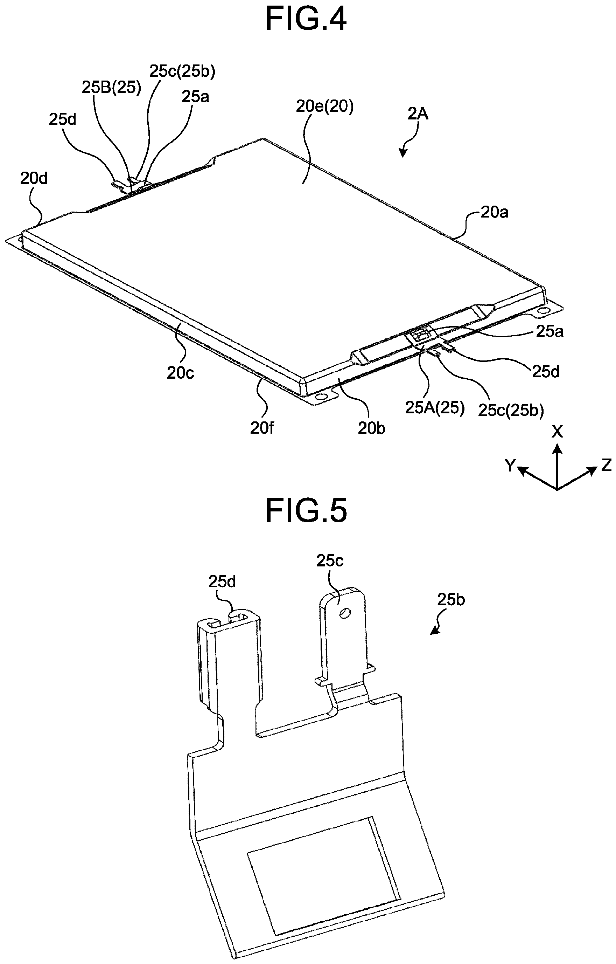

A battery pack 1A of a second embodiment illustrated in FIGS. 4 to 6 is configured similarly to the battery pack 1 in the first embodiment. Thus, the second embodiment also can attain similar results (effects) based on the similar configuration as that of the first embodiment.

However, the second embodiment, as illustrated in FIGS. 4 and 5, differs from the first embodiment in that each of a positive electrode terminal 25A and a negative electrode terminal 25B includes a male connector 25c and a female connector 25d, for example. The male connector 25c is one example of a male structure, and the female connector 25d is one example of a female structure. The male connector 25c and the female connector 25d can be referred to as flat connection terminals.

Bases 25a of the positive electrode terminal 25A and the negative electrode terminal 25B are integrated (joined) with connections 25b of the same configuration by welding. That is, the connection 25b of the positive electrode terminal 25A and the connection 25b of the negative electrode terminal 25B are the same components. The male connector 25c and the female connector 25d both project from the connections 25b in the Y direction, that is, oppositely to the battery cell 2A, and are aligned in the Z direction. The positive electrode terminal 25A and the negative electrode terminal 25B are arranged such that their respective male and female connectors 25c and 25d are rotationally symmetric to each other. The connections 25b are also referred to as connection terminals.

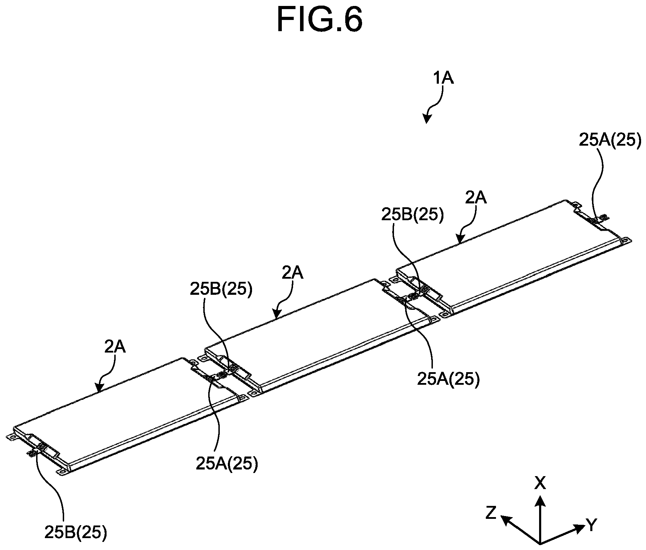

As illustrated in FIG. 6, in the second embodiment, battery cells 2A are aligned in the Y direction. The battery cells 2A are arranged such that the positive electrode terminals 25A and the negative electrode terminals 25B are alternately arranged in the Y direction. Every two adjacent battery cells 2A in the Y direction are mechanically and electrically connected to each other by press-fitting pairs of male connectors 25c and female connectors 25d. The Y direction is one example of a first direction.

In the second embodiment as in the foregoing, the positive electrode terminals 25A and the negative electrode terminals 25B each include the male connector 25c and the female connector 25d. With such a configuration, for example, the battery cells 2A can be more readily connected by connecting the pairs of the male connectors 25c and the female connectors 25d, which can reduce the time and effort needed for the manufacture (assembling work) of the battery pack 1A, as with the first embodiment. It is also possible to integrate the battery cells 2A more firmly.

### First Modification of Second Embodiment

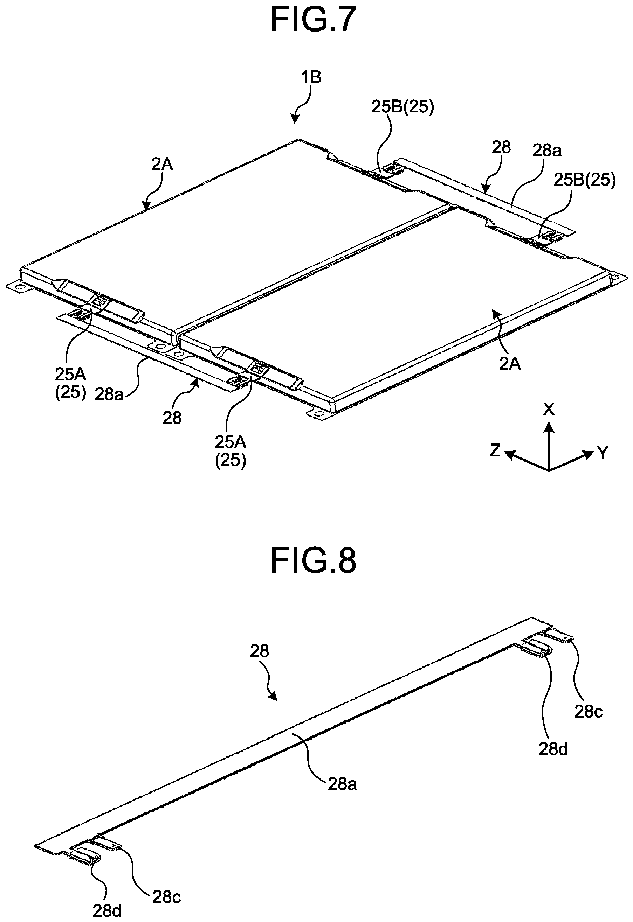

A battery pack 1B of a first modification illustrated in FIGS. 7 and 8 is configured similarly to the battery pack 1A in the second embodiment. Thus, the first modification can also attain similar results (effects) based on the similar configuration as that of the second embodiment.

However, the first modification, as illustrated in FIGS. 7 and 8, differs from the second embodiment in that the battery cells 2A are electrically connected via conductive members 28, for example. The conductive members 28 are one example of a wiring member. The conductive members 28 are also referred to as busbars.

As illustrated in FIG. 8, the conductive members 28 each include a base 28a, two male connectors 28c, and two female connectors 28d, for example. The base 28a has a band-plate shape extending in one direction (Z direction). The base 28a includes, at one end, a pair of a male connector 28c and a female connector 28d, and at the other end another pair of a male connector 28c and a female connector 28d. The configurations (shapes) of the male connectors 28c and the female connectors 28d are the same as the configurations (shapes) of the male connectors 25c and the female connectors 25d (see FIG. 5) of the positive electrode terminals 25A (negative electrode terminals 25B).

As illustrated in FIG. 7, in the second embodiment, the battery cells 2A are aligned in the Z direction. The two adjacent battery cells 2A in the Z direction are electrically and mechanically connected to each other via the conductive members 28. The battery pack 1B can be formed by stacking in the X direction multiple pairs of parallel-connected battery cells 2A in the Z direction and connecting the pairs in series, for example. The Z direction is one example of a first direction.

As in the foregoing, in the first modification, the battery cells 2A are electrically connected via the conductive members 28 including the male connectors 28c and the female connectors 28d of the same configurations as those of the male connectors 25c and the female connectors 25d of the positive electrode terminals 25A (negative electrode terminals 25B), for example. With such a configuration, the battery cells 2A can be more readily electrically connected by connecting the male connectors 25c and 28c and the female connectors 25d and 28d by press-fitting, which can reduce the time and effort needed for the manufacture (assembling work) of the battery pack 1B, for example.

### Second Modification of Second Embodiment

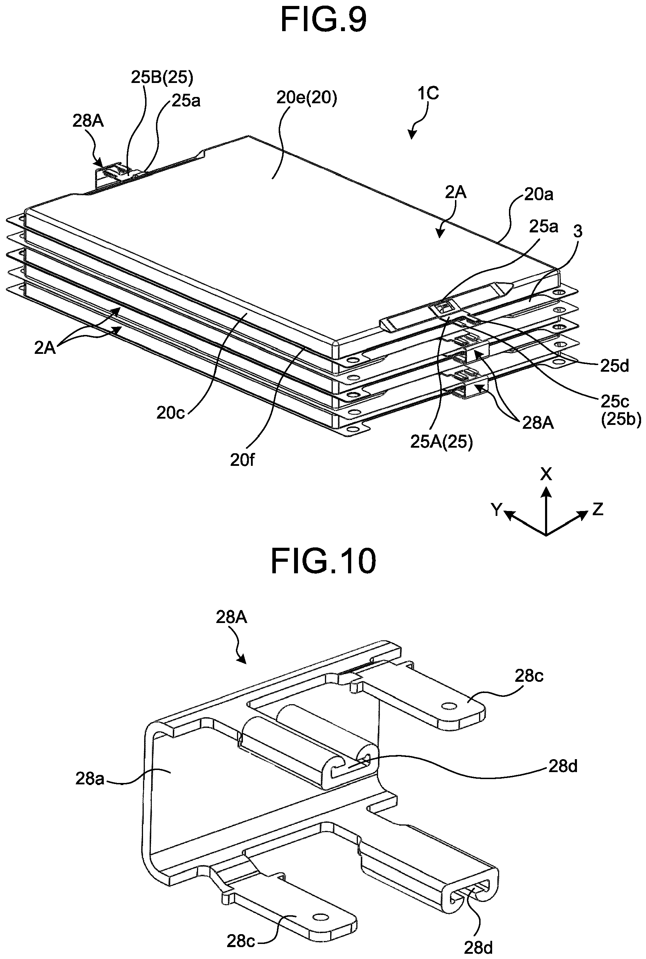

A battery pack 1C of a second modification illustrated in FIGS. 9 and 10 is configured similarly to the battery pack 1B in the first modification of the second embodiment. Thus, the second modification can also attain similar results (effects) based on the similar configuration as that of the first modification of the second embodiment.

However, the second modification, as illustrated in FIG. 9, differs from the first modification of the second embodiment in that the battery cells 2A are aligned in the X direction, for example. Every two adjacent battery cells 2A in the X direction are electrically and mechanically connected to each other via conductive members 28A. The X direction is one example of a first direction, and the conductive members 28A are one example of a wiring member.

As illustrated in FIGS. 9 and 10, as viewed in the Z direction, the conductive members 28A are substantially U-shaped and open in the Y direction, that is, toward the battery cells 2A. The conductive members 28A each includes a pair of a male connector 28c and a female connector 28d juxtaposed in the Z direction at one X-directional end, another pair of a male connector 28c and a female connector 28d juxtaposed in the Z direction at the other X-directional end, and a base 28a connecting the two pairs. According to the second modification, the conductive members 28A can work to attain the effects similarly to the conductive members 28 of the first modification of the second embodiment.

The second modification describes the example of connecting the two adjacent battery cells 2A in the X direction via the conductive members 28A. However, it is not limited to such an example. The male connector 25c and the female connector 25d of the positive electrode terminal 25A and the male connector 25c and the female connector 25d of the negative electrode terminal 25B may be directly connected by folding back the connection 25b of the positive electrode terminal 25A (negative electrode terminal 25B) around the Z-directional axis and press-fitting them, for example.

### Third Embodiment

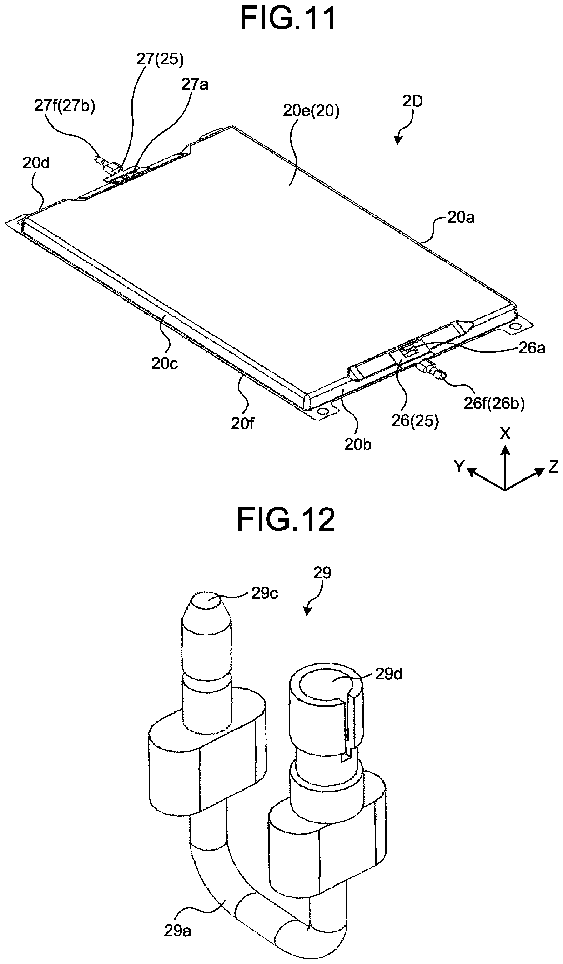

A battery pack 1D of a third embodiment illustrated in FIGS. 11 to 13 is configured similarly to the battery pack 1 in the first embodiment. Thus, the third embodiment can also attain similar results (effects) based on the similar configuration as that of the first embodiment.

However, the third embodiment, as illustrated in FIG. 11, differs from the first embodiment in that the positive electrode terminal 26 includes a female connector 26f and the negative electrode terminal 27 includes a male connector 27f, for example. The male connector 27f is one example of a male structure, and the female connector 26f is one example of a female structure. The male connector 27f and the female connector 26f can be referred to as bullet terminals. The male and female structures are not limited to this example. For example, the positive electrode terminal 26 may include the male connector 27f and the negative electrode terminal 27 may include the female connector 26f.

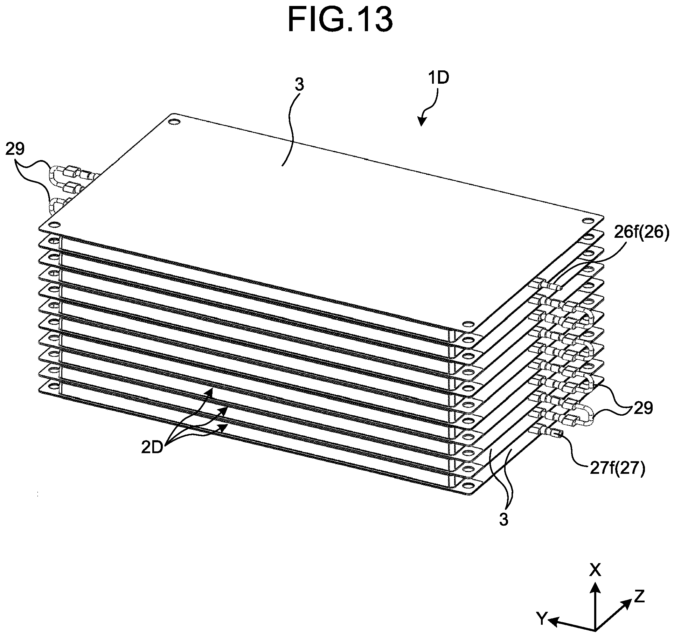

As illustrated in FIG. 13, a plurality of battery cells 2D is aligned in the X direction. Every two adjacent battery cells 2D in the X direction are mechanically and electrically connected to each other via conductive members 29. As illustrated in FIG. 12, the conductive members 29 each include a male connector 29c that is connectable to the female connector 26f by press-fitting, a female connector 29d that is connectable to the male connector 27f by press-fitting, and a connection 29a connecting the male connector 29c and the female connector 29d, for example. The conductive members 29 are one example of a wiring member. The conductive members 29 are also referred to as busbars. According to the third embodiment, the conductive members 29 can work to attain the effects similarly to the conductive members 28 of the first modification of the second embodiment.

### Fourth Embodiment

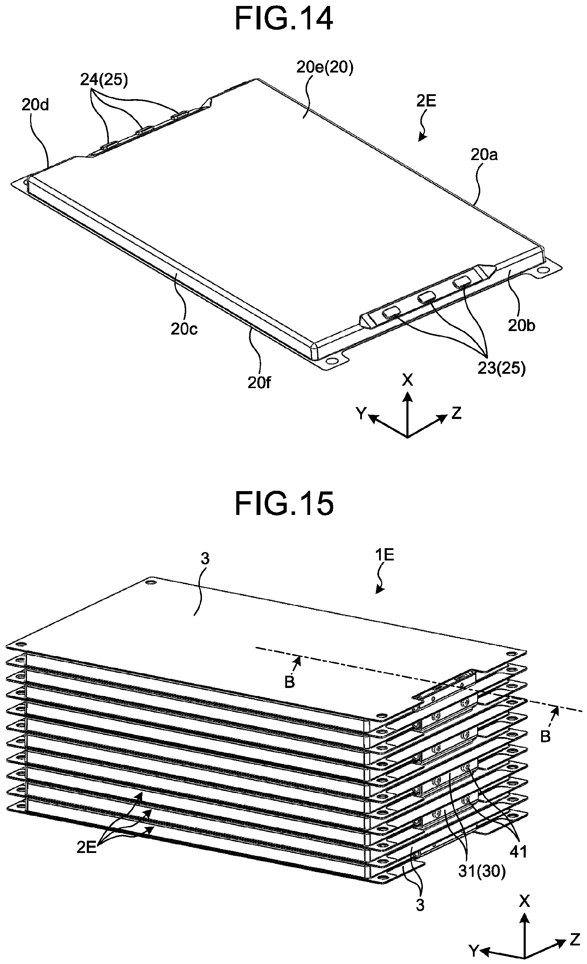

A battery pack 1E of a fourth embodiment illustrated in FIGS. 14 to 16 is configured similarly to the battery pack 1 in the first embodiment. Thus, the fourth embodiment can also attain similar results (effects) based on the similar configuration as that of the first embodiment.

However, the fourth embodiment, as illustrated in FIG. 14, differs from the first embodiment in that a battery cell 2E includes a plurality of positive electrode terminals 23 and a plurality of negative electrode terminals 24, for example. The number of the positive electrode terminals 23 (negative electrode terminals 24) is not limited to three, and may be two or four or more, for example.

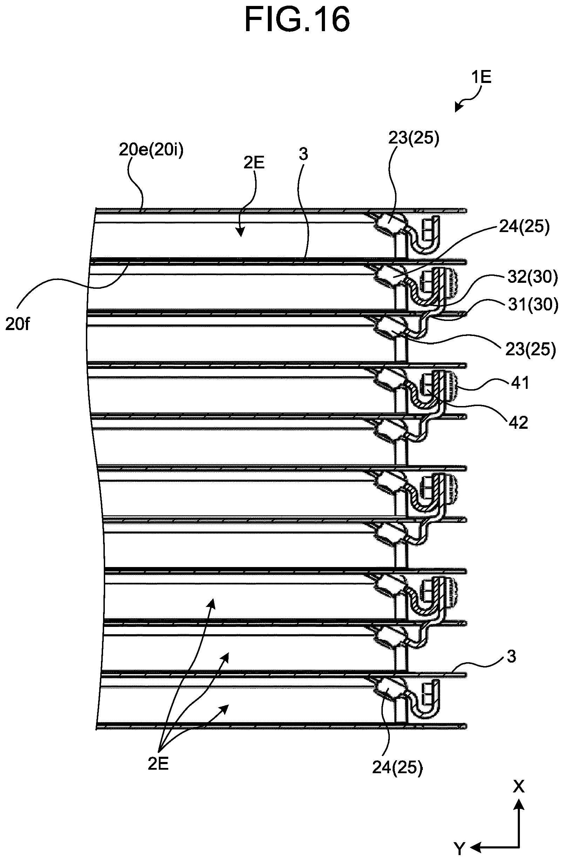

As illustrated in FIGS. 15 and 16, in the fourth embodiment, every two adjacent battery cells 2E in the X direction are electrically connected to each other via busbars 30. The busbars 30 each include a first member 31 and a second member 32, for example. The first member 31 is one example of a first connecting member, and the second member 32 is one example of a second connecting member.

The first member 31 is integrated (joined) with the positive electrode terminals 23 of one of the two adjacent battery cells 2E in the X direction by welding, for example. The second member 32 is integrated (joined) with the negative electrode terminals 24 of the other of the two adjacent battery cells 2E in the X direction by welding, for example. The first member 31 and the second member 32 are integrated (joined) with each other with bolts 41 and nuts 42, by inserting the bolts 41 through the first and second members 31 and 32 in the Y direction and fitting into the nuts 42. The bolts 41 and the nuts 42 are one example of a fastener.

As in the foregoing, in the fourth embodiment, the positive electrode terminals 23 of one of the two battery cells 2 and the negative electrode terminals 24 of the other are electrically connected via the busbar 30, for example. With such a configuration, the battery cells 2E each including the positive electrode terminals 23 (negative electrode terminals 24) can be more easily connected to each other via the busbar 30, for example.

Furthermore, in the fourth embodiment, each busbar 30 includes the first member 31 that is electrically connected to the positive electrode terminals 23 of one of the two battery cells 2E, and the second member 32 that is electrically connected to the negative electrode terminals 24 of the other and to the first member 31 with the bolt 41 and the nut 42, for example. With such a configuration, due to the division of the first member 31 and the second member 32, it is possible to electrically connect the battery cells 2E more easily, more smoothly, or more accurately, for example.

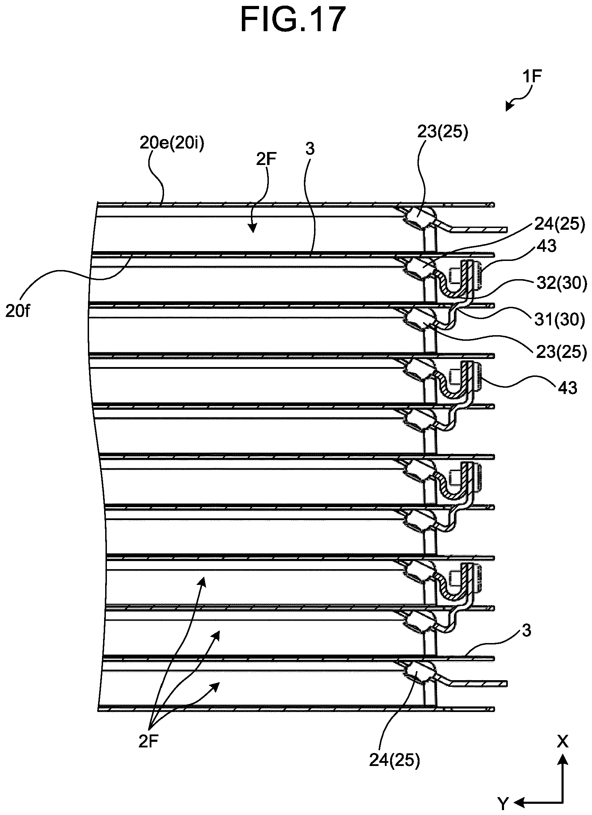

The fourth embodiment has described the example in which the first member 31 and the second member 32 are integrated (joined) with the bolt 41 and the nut 42, however, it is not limited to such an example. For instance, as in a first modification illustrated in FIG. 17, the first member 31 and the second member 32 may be integrated (joined) with a fastener 43 such as a rivet or a screw.

### Fifth Embodiment

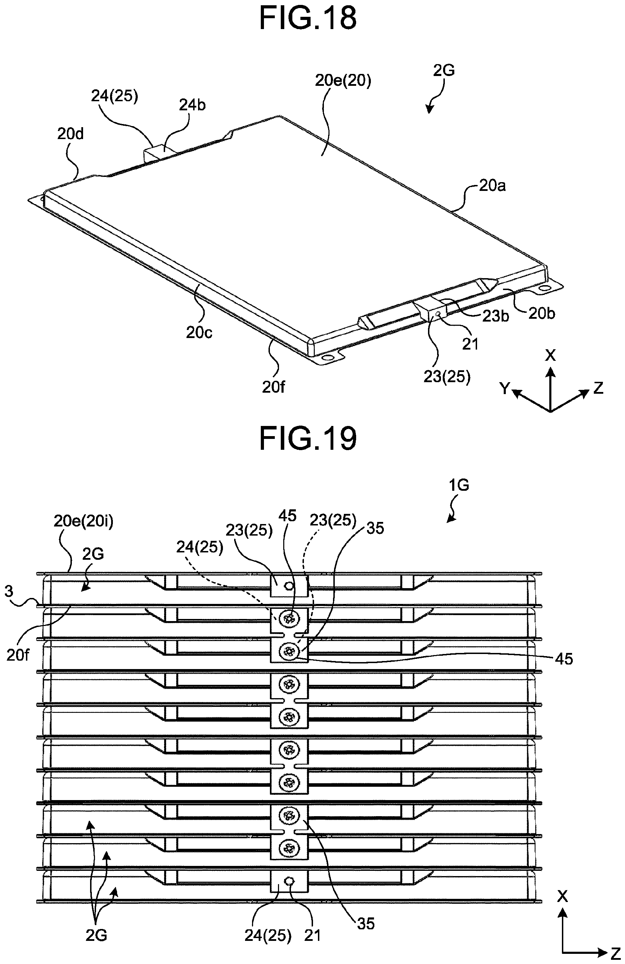

A battery pack 1G of a fifth embodiment illustrated in FIGS. 18 and 19 is configured similarly to the battery pack 1E in the fourth embodiment. Thus, the fifth embodiment can also attain similar results (effects) based on the similar configuration as that of the fourth embodiment.

However, the fifth embodiment, as illustrated in FIGS. 18 and 19, differs from the fourth embodiment in that a plurality of battery cells 2G is electrically connected via busbars 35, for example. The busbars 35 each include a narrow part.

Positive electrode terminals 23 and negative electrode terminals 24 each include a plurality of bases (not depicted) and connections 23b and 24b that are connectable to the busbars 35. The connections 23b and 24b and the bases are integrated (joined) together by welding, for example. The connections 23b and 24b are also referred to as connection terminals.

The connections 23b and 24b are each provided with a female screw 21. The female screw 21 engages with the male screw of a screw 45 penetrating through the busbar 35 in the Y direction, thereby electrically and mechanically connecting the battery cells 2G to one another. The screw 45 is one example of a fastener having conductivity.

The battery packs 1 to 1G and the battery cells 2 to 2G in the foregoing embodiments can be improved in tolerance to large amounts of charging and discharging current and to screw tightening torque at the time of manufacturing, for example.

While certain embodiments have been described, these embodiments have been presented by way of example only, and are not intended to limit the scope of the inventions. Indeed, the novel embodiments described herein may be embodied in a variety of other forms; furthermore, various omissions, substitutions, combinations, and changes in the form of the embodiments described herein may be made without departing from the spirit of the inventions. The accompanying claims and their equivalents are intended to cover such forms or modifications as would fall within the scope and spirit of the inventions. The present invention can also be implemented by configurations other than those disclosed in the embodiments to attain various effects (including derivative effects) attainable by the basic configurations (technical features). In addition, the specifications (structure, type, direction, shape, size, length, width, thickness, height, number, arrangement, position, material, and the like) of the respective constituent elements can be changed as appropriate.

## Claims

1. A battery pack comprising:
a plurality of battery cells aligned in a first direction, wherein
the battery cells each include a positive electrode terminal and a negative electrode terminal, the positive electrode terminal including one of a male structure and a female structure of a shape to be fitted to the male structure by press-fitting, the negative electrode terminal including the other of the male structure and the female structure.

2. The battery pack according to claim 1, wherein
the male structure projects in the first direction, and the female structure is recessed in the first direction, and
in a row of the battery cells in the first direction, the positive electrode terminal of one of two adjacent battery cells in the first direction and the negative electrode terminal of the other of the two battery cells are electrically connected by press-fitting of the male structure and the female structure.

3. The battery pack according to claim 2, wherein
each of the battery cells includes the positive electrode terminal at one end and the negative electrode terminal at the other end in a second direction intersecting with the first direction, and
in a row of the battery cells in the first direction, connections, at which the positive electrode terminal of one of two adjacent battery cells in the first direction and the negative electrode terminal of the other of the two battery cells are electrically connected by press-fitting of the male structure and the female structure, are alternately arranged at both sides of the battery cells in the second direction.

4. The battery pack according to claim 1, wherein
in a row of the battery cells in the first direction, the positive electrode terminal of one of two adjacent battery cells in the first direction and the negative electrode terminal of the other of the two battery cells are electrically connected via a wiring member including the male structure and the female structure.

5. The battery pack according to claim 1, wherein
the positive electrode terminal and the negative electrode terminal each include the male structure and the female structure.

6. A battery pack comprising:
a plurality of battery cells aligned in a first direction, wherein
the battery cells each include a plurality of positive electrode terminals and a plurality of negative electrode terminals, and
in a row of the battery cells in the first direction, the positive electrode terminals of one of two adjacent battery cells in the first direction and the negative electrode terminals of the other of the two battery cells are electrically connected via a busbar.

7. The battery pack according to claim 6, wherein
the busbar includes a first connecting member and a second connecting member connected to the first connecting member with a fastener, the first connecting member electrically connected to the positive electrode terminals of one of two adjacent battery cells in the first direction, the second connecting member electrically connected to the negative electrode terminals of the other of the two battery cells.

8. A battery cell to be used in the battery pack according to any one of claims 1 to 7.
